# EUROPEAN PATENT SPECIFICATION

(11) **EP 4 464 560 B1**
(45) Date of publication and mention of the grant of the patent: **18.03.2026**
(21) Application number: 24176250.9
(22) Date of filing: 16.05.2024
(51) Int. Cl.: B60R 7/04, F16C 29/00, F16C 29/02, F16C 29/12, B60N 2/075

(54) **RAIL DEVICE AND METHOD OF ASSEMBLING THE SAME**
SCHIENENVORRICHTUNG UND VERFAHREN ZUR MONTAGE DAVON
DISPOSITIF DE RAIL ET SON PROCÉDÉ D'ASSEMBLAGE

(30) Priority: 16.05.2023 KR 20230063051
(43) Date of publication of application: 20.11.2024
(73) Proprietor: Hyundai Transys Inc., Chungcheongnam-do 31930 (KR)
(72) Inventor: KIM, Chan Ju, 15862 Gunpo-si, Gyeonggi-do (KR); BAEK, Ingul, 16812 Yongin-si, Gyeonggi-do (KR); BAE, Song Hee, 07019 Seoul (KR); YOO, Eom Seok, 18394 Hwaseong-si, Gyeonggi-do (KR); YUN, Ki Young, 21969 Yeonsu-gu, Incheon (KR); JANG, Yongseong, 15824 Gunpo-si, Gyeonggi-do (KR); CHOI, Jin Wook, 18447 Hwaseong-si, Gyeonggi-do (KR)
(74) Representative: Viering, Jentschura & Partner mbB Patent- und Rechtsanwälte

(56) References cited:
- WO-A1-03/089265
- DE-A1- 102020 204 893
- DE-U1- 202015 105 035
- US-A1- 2017 175 811

## Description

### TECHNICAL FIELD

The present invention relates to a rail device, which is configured to allow a connection target to slide, and a method of assembling the same.

A rail device according to the preamble of claim 1 is, e.g., known from US 2017/175811 A1.

### BACKGROUND ART

In general, a console box may be provided between a driver seat and a passenger seat in a vehicle. The console box may be used to store items or serve as an armrest.

The console box may be coupled to a vehicle body by means of a rail device and slide. Because the console box may slide in the state in which the console box is coupled to the vehicle body by means of the rail device, an interior space of the vehicle may be efficiently used.

The rail device may include a first rail coupled to the vehicle body, and a second rail coupled to the console box and configured to slide in a state in which the second rail is coupled to the first rail. An elastic member may be coupled to the second rail. The elastic member may be tightly attached to the first rail and elastically support the second rail during a process of assembling the second rail to the first rail, such that the second rail may stably slide along the first rail.

However, because a gap between the first rail and the second rail is not uniform during the process of assembling the first rail and the second rail in the rail device in the related art, an elastic force of the elastic member applied to the second rail varies.

DE 10 2020 204893 A1 discloses a sliding device and an armrest comprising the sliding device.

DE 20 2015 105035 U1 discloses a linear guide with self-adjusting play reduction.

### [Document of Related Art]

### [Patent Document]

(Patent Document 1) Korean Patent Application Laid-Open No. 10-2020-0074713 (published on June 25, 2020)

### SUMMARY OF THE INVENTION

The present invention has been made in an effort to solve the above-mentioned problem, and an object of the present invention is to provide a rail device, in which an elastic portion of an elastic member is plastically deformed by a jig assembled to a first rail so that an elastic force of the elastic member is uniformly applied to a second rail to allow the second rail to smoothly slide, and a method of assembling the same.

To this end, the invention provides a rail device according to claim 1 and a method of assembling the rail device according to claim 5. Further embodiments are described in the dependent claims.

In other words, the present invention provides a rail device including a first rail having frame portions provided at two opposite sides thereof, and sliding grooves provided in the frame portions, a second rail having guides provided at two opposite sides thereof and configured to conform to the sliding grooves, the guide being configured to be slidable in a state in which the guide is coupled to the sliding groove, and elastic members coupled to the guides and each having at least one elastic portion being in contact with an inner wall surface of the frame portion and configured to elastically support the second rail, wherein each of the elastic members comprises: first coupling portions disposed at upper and lower sides at each of two opposite ends of each of the elastic members with the at least one elastic portion being interposed between the two opposite ends, the first coupling portions surrounding each of the guides; and second coupling portions disposed at two opposite lateral sides at the respective two opposite ends and disposed in coupling grooves of each of the guides.

The elastic portion may include: a first elastic portion being in contact with an inner wall surface of an upper end of the frame portion and configured to be convex toward the inner wall surface of the upper end of the frame portion; and a second elastic portion being in contact with an inner wall surface of a lateral end of the frame portion and configured to be convex toward the inner wall surface of the lateral end of the frame portion.

The first rail may be connected to a vehicle body, and the second rail may be connected to a connection target.

The connection target may be a console box.

The present invention provides a method of assembling the rail device as described above, the method including: step (a) of coupling a jig to the frame portion of the first rail so that a pressing portion of the jig is positioned in the sliding groove in the frame portion; and step (b) of inserting the guide of the second rail into the sliding groove to apply a pressing force of the pressing portion of the jig to the elastic portion of the elastic member coupled to the guide so that the elastic portion is plastically deformed.

The method may further include: step (c) of removing the jig from the first rail after step (b) so that the elastic portion is in contact with an inner wall surface of the frame portion.

The jig may include: a main body having an accommodation portion provided at one side directed toward the elastic member; and a pressing plate configured to constitute the pressing portion of the jig and coupled to a bottom of the accommodation portion.

Any one of an upper end, a lateral end, and a lower end of the frame portion may be inserted into the accommodation portion.

The pressing force of the pressing plate may be applied to the elastic portion in a state in which the pressing plate is inserted into the sliding groove so that the elastic portion is plastically deformed.

The elastic portion may include: a first elastic portion configured to be convex toward an inner wall surface of an upper end of the frame portion; and a second elastic portion configured to be convex toward an inner wall surface of a lateral end of the frame portion.

The jig may include: a first jig coupled to an upper end of the frame portion; a second jig coupled to a lateral end of the frame portion; and a third jig coupled to a lower end of the frame portion, the first elastic portion may be plastically deformed by a pressing plate of the first jig, and the second elastic portion may be plastically deformed by a pressing plate of the second jig.

According to the present invention, the elastic portion of the elastic member is plastically deformed by the jig assembled to the first rail so that the elastic force of the elastic member is uniformly applied to the second rail, such that the second rail may smoothly slide.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a perspective view illustrating a state in which a second rail is assembled to a first rail according to an exemplary embodiment of the present invention.
FIG. 2 is a side view illustrating a state in which the second rail is assembled to the first rail according to the exemplary embodiment of the present invention.
FIG. 3 is a view illustrating a state made before the second rail is assembled to the first rail according to the exemplary embodiment of the present invention.
FIG. 4 is a view illustrating a state made before an elastic member is assembled to a guide of the second rail according to the exemplary embodiment of the present invention.
FIG. 5 is a view illustrating a state made before a jig and the second rail are assembled to the first rail according to the exemplary embodiment of the present invention.
FIG. 6 is a view illustrating a state in which the jig is assembled to the first rail according to the exemplary embodiment of the present invention.
FIG. 7 is a view illustrating a state in which the jig and the second rail are assembled to the first rail according to the exemplary embodiment of the present invention.
FIG. 8 is an enlarged view of part A in FIG. 7.
FIG. 9 is a cross-sectional view taken along line B-B in FIG. 8.
FIG. 10 is a view illustrating a state in which the jig is removed from the first rail according to the exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Hereinafter, exemplary embodiments of the present invention will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present invention, the specific descriptions of publicly known related configurations or functions will be omitted when it is determined that the specific descriptions may obscure the subject matter of the present invention. Further, the exemplary embodiments of the present invention will be described below, but the technical spirit of the present invention is not limited thereto and may of course be modified and variously carried out by those skilled in the art.

Hereinafter, a rail device of the present invention will be described.

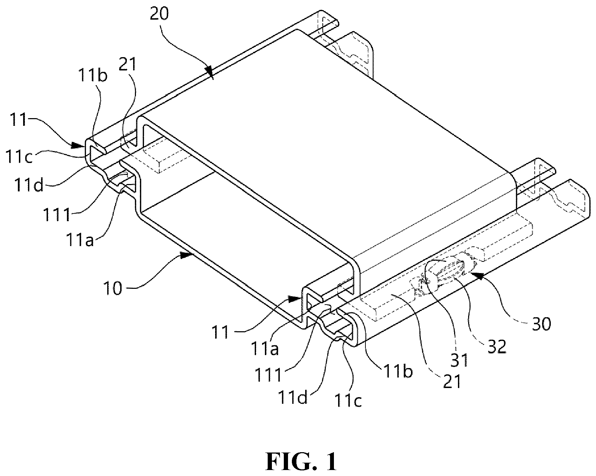

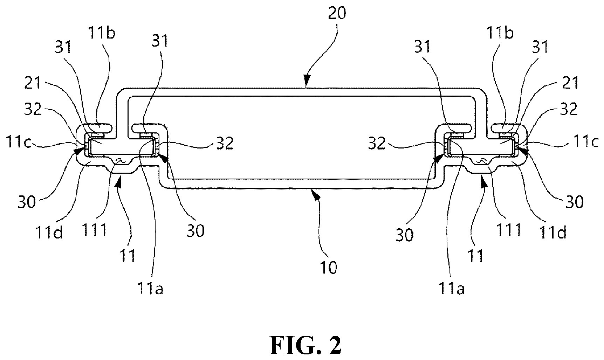

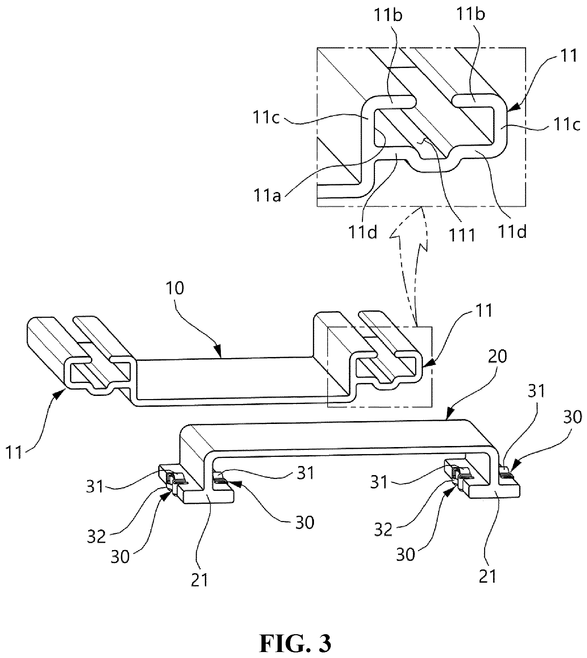

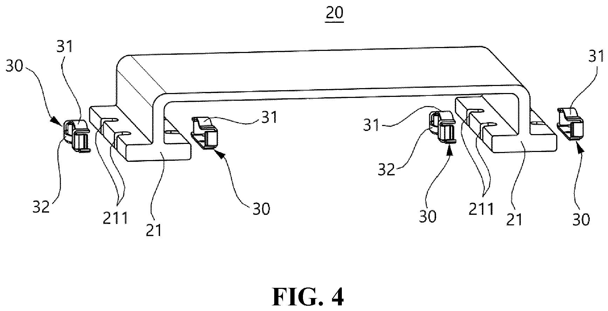

FIG. 1 is a perspective view illustrating a state in which a second rail is assembled to a first rail according to an exemplary embodiment of the present invention, FIG. 2 is a side view illustrating a state in which the second rail is assembled to the first rail according to the exemplary embodiment of the present invention, FIG. 3 is a view illustrating a state made before the second rail is assembled to the first rail according to the exemplary embodiment of the present invention, and FIG. 4 is a view illustrating a state made before an elastic member is assembled to a guide of the second rail according to the exemplary embodiment of the present invention.

As illustrated in FIGS. 1 to 4, a rail device according to the present invention may include a first rail 10, a second rail 20 assembled to the first rail 10, and elastic members 30 assembled to the second rail 20.

The first rail 10 may have frame portions 11 provided at two opposite sides thereof. A sliding groove 111 may be provided in the frame portion 11 and guide a sliding movement of the second rail 20.

The second rail 20 may have guides 21 provided at two opposite sides thereof. The guide 21 may be configured to conform to the sliding groove 111.

For example, the guide 21 may be configured in a shape such as a "⊥" that may be inserted into the sliding groove 111. The guide 21 may move along the sliding groove 111 in the state in which the guide 21 is inserted into the sliding groove 111.

The elastic members 30 may be coupled to two opposite left and right sides of the guide 21. The elastic member 30 may have elastic portions. The elastic portions may include a first elastic portion 31 and a second elastic portion 32. The first elastic portion 31 and the second elastic portion 32 may be in contact with inner wall surfaces 11a of the frame portion 11 and elastically support the second rail 20.

The elastic member 30 may allow the guide 21 to smoothly move along the sliding groove 111 in the state in which the guide 21 is inserted into the sliding groove 111.

The first elastic portion 31 may be in contact with an inner wall surface 11a of an upper end 11b of the frame portion 11. The first elastic portion 31 may be configured to be convex toward the inner wall surface 11a of the upper end 11b of the frame portion 11.

The second elastic portion 32 may be in contact with an inner wall surface 11a of a lateral end 11c of the frame portion 11. The second elastic portion 32 may be configured to be convex toward the inner wall surface 11a of the lateral end 11c of the frame portion 11.

The first rail 10 may be connected to a vehicle body (not illustrated). The second rail 20 may be connected to a connection target (not illustrated) such as a console box. A connection target, such as the console box, is slidable by the first rail 10 and the second rail 20, such that an interior space of the vehicle may be efficiently used.

For example, the rail device of the present invention may be used not only for the console box but also for all components required to slide in the vehicle.

The elastic member 30 include first coupling portions 33 and second coupling portions 34.

The first coupling portions 33 are provided at two opposite upper and lower sides with the elastic portions interposed therebetween. The first coupling portion 33 may be configured in a bent shape to surround the guide 21.

The second coupling portions 34 is provided at two opposite left and right ends. The second coupling portion 34 may be configured in a bent shape that is inserted into a coupling groove 211 provided in the guide 21.

The elastic member 30 may be securely assembled to the guide 21 of the second rail 20 by the first coupling portion 33 and the second coupling portion 34.

Next, a method of assembling the rail device of the present invention will be described.

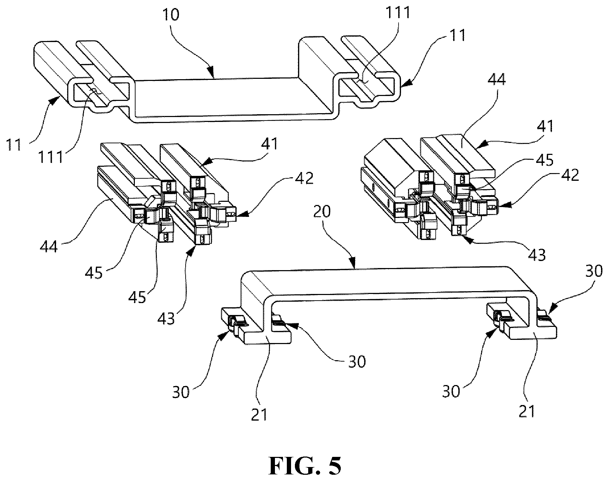

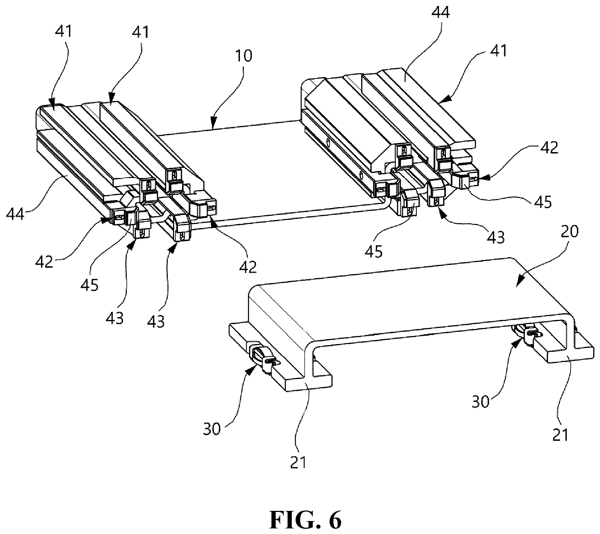

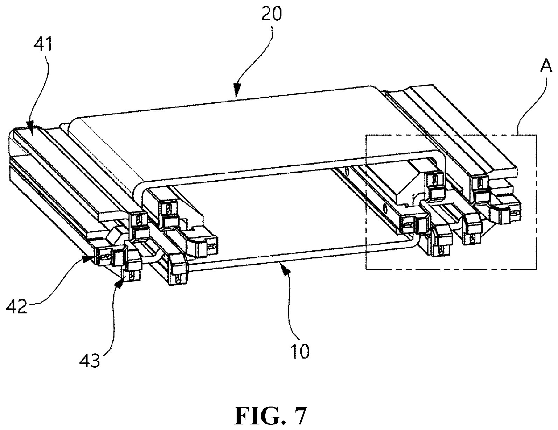

FIG. 5 is a view illustrating a state made before a jig and the second rail are assembled to the first rail according to the exemplary embodiment of the present invention, FIG. 6 is a view illustrating a state in which the jig is assembled to the first rail according to the exemplary embodiment of the present invention, and FIG. 7 is a view illustrating a state in which the jig and the second rail are assembled to the first rail according to the exemplary embodiment of the present invention.

As illustrated in FIGS. 5 to 7, the method of assembling the rail device according to the present invention may include a step of assembling a jig to the first rail 10, a step of assembling the second rail 20 to the first rail 10 and plastically deforming the elastic portions of the elastic member 30 coupled to the second rail 20 by a pressing portion of the jig, and a step of removing the jig from the first rail 10.

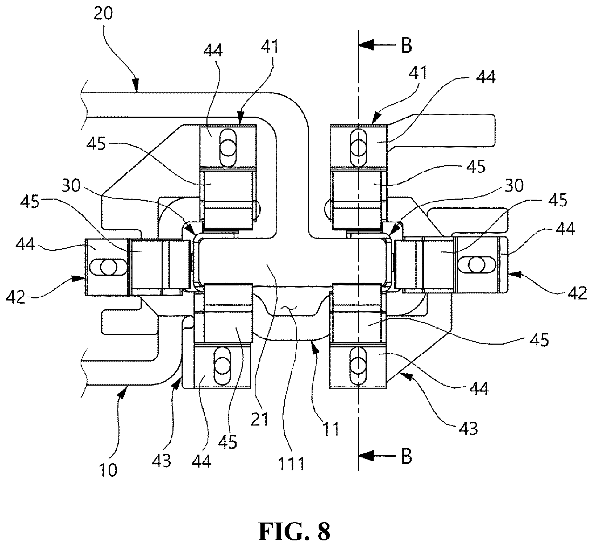

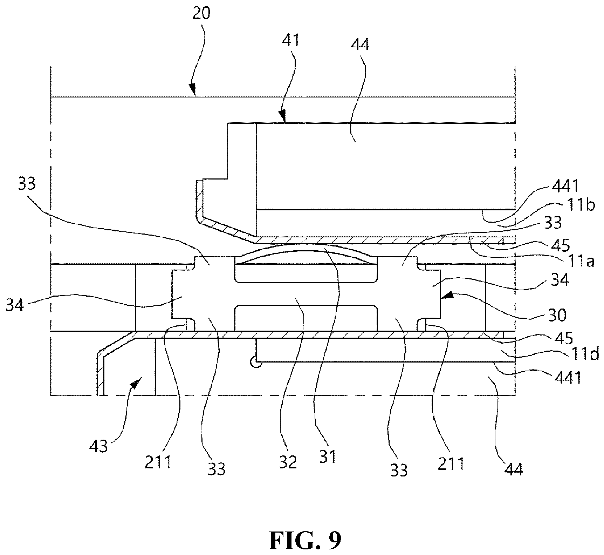

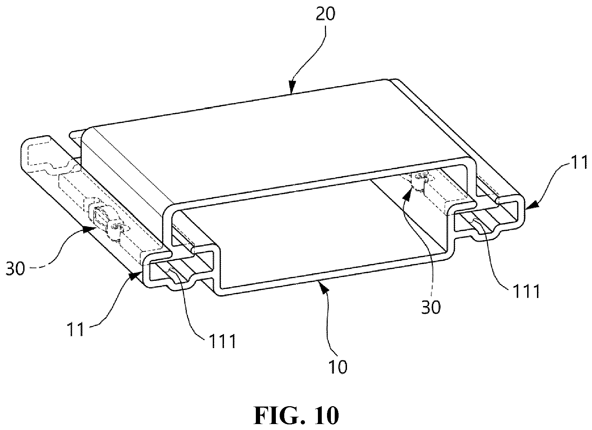

FIG. 8 is an enlarged view of part A in FIG. 7, FIG. 9 is a cross-sectional view taken along line B-B in FIG. 8, and FIG. 10 is a view illustrating a state in which the jig is removed from the first rail according to the exemplary embodiment of the present invention.

As illustrated in FIGS. 6 and 8, the jig may be coupled to the frame portion 11 of the first rail 10. The jig may include a first jig 41, a second jig 42, and a third jig 43.

The first jig 41 may be coupled to the upper end 11b of the frame portion 11. The second jig 42 may be coupled to the lateral end 11c of the frame portion 11. The third jig 43 may be coupled to a lower end 11d of the frame portion 11.

The first jig 41, the second jig 42, and the third jig 43 may be configured to have the same structure. The first jig 41, the second jig 42, and the third jig 43 may each include a main body 44 and a pressing plate 45.

The main body 44 may have an accommodation portion 441. The accommodation portion 441 may be provided at one side of the main body 44 directed toward the elastic member 30.

Any one of the upper end 11b, the lateral end 11c, and the lower end 11d of the frame portion 11 may be accommodated in the accommodation portion 441.

The pressing plate 45 may be coupled to a bottom of the accommodation portion 441. The pressing plate 45 may constitute a pressing portion of the jig.

As illustrated in FIGS. 8 and 9, when the first jig 41, the second jig 42, and the third jig 43 are coupled to the upper end 11b, the lateral end 11c, and the lower end 11d of the frame portion 11, the main body 44 may be positioned outside the frame portion 11, and the pressing plate 45 may be positioned in the sliding groove 111 of the frame portion 11.

When the guide 21 of the second rail 20 is coupled to the sliding groove 111 in the state in which the first jig 41, the second jig 42, and the third jig 43 are coupled to the frame portion 11 of the first rail 10, pressing force of the pressing plates 45 may be applied to the first elastic portion 31 and the second elastic portion 32 of the elastic member 30, such that the first elastic portion 31 and the second elastic portion 32 may be plastically deformed.

More specifically, the first elastic portion 31 may be plastically deformed by the pressing plate 45 of the first jig 41. The second elastic portion 31 may be plastically deformed by the pressing plate 45 of the second jig 42. The pressing plate 45 of the third jig 43 may serve to support the elastic member 30 so that the first elastic portion 31 and the second elastic portion 32 may be smoothly deformed plastically.

As illustrated in FIG. 10, in the state in which the first elastic portion 31 and the second elastic portion 32 are plastically deformed, all the first jig 41, the second jig 42, and the third jig 43 assembled to the first rail 10 are removed.

When all the first jig 41, the second jig 42, and the third jig 43 are removed from the first rail 10, the first elastic portion 31 and the second elastic portion 32, which are plastically deformed, may be in contact with the inner wall surface 11a of the upper end 11b and the inner wall surface 11a of the lateral end 11c of the frame portion 11.

As described above, the first elastic portion 31 and the second elastic portion 32, which are plastically deformed, provide uniform elastic force to the second rail 20, such that the guide 21 of the second rail 20 may smoothly slide along the sliding groove 111 of the first rail 10.

According to the present invention described above, the elastic portion of the elastic member is plastically deformed by the jig assembled to the first rail so that the elastic force of the elastic member is uniformly applied to the second rail, such that the second rail may smoothly slide.

As described above, the exemplary embodiments have been described and illustrated in the drawings and the specification. The exemplary embodiments were chosen and described in order to explain certain principles of the invention and their practical application, to thereby enable others skilled in the art to make and utilize various exemplary embodiments of the present invention, as well as various alternatives and modifications thereof.

## Claims

1. A rail device comprising:
a first rail (10) having frame portions (11) disposed at two opposite sides thereof, the first rail (10) having sliding grooves (111), each of the sliding grooves (111) being defined in each of the frame portions (11);
a second rail (20) having guides (21) disposed at two opposite sides thereof, each of the guides (21) being conforming to each of the sliding grooves (111) and being slidable **in** a state in which each of the guides (21) is coupled to each of the sliding grooves (111); and
elastic members (30), each being coupled to the guides (21) and having at least one elastic portion (31, 32) being in contact with an inner wall surface (11a) of each of the frame portions (11),
wherein each of the elastic members (30) is configured to elastically support the second rail (20),
**characterized in that**
each of the elastic members (30) comprises:
first coupling portions (33) disposed at upper and lower sides at each of two opposite ends of each of the elastic members (30) with the at least one elastic portion (31, 32) being interposed between the two opposite ends, the first coupling portions surrounding each of the guides (21); and
second coupling portions (34) disposed at two opposite lateral sides at the respective two opposite ends and disposed in coupling grooves of each of the guides (21).

2. The rail device of claim 1, wherein the at least one elastic portion (31, 32) comprises:
a first elastic portion (31) being in contact with an inner wall surface (11a) of an upper end (11b) of each of the frame portions (11) and being configured to be convex toward the inner wall surface (11a) of the upper end (11b) of each of the frame portions (11); and
a second elastic portion (32) being in contact with an inner wall surface (11a) of a lateral end (11c) of each of the frame portions (11) and being configured to be convex toward the inner wall surface (11a) of the lateral end (11c) of each of the frame portions (11).

3. The rail device of claim 1 or 2, wherein the first rail (10) is connected to a vehicle body, and the second rail (20) is connected to a connection target.

4. The rail device of claim 3, wherein the connection target has a console box.

5. A method of assembling the rail device according to claim 1, the method comprising:
coupling a jig (41, 42, 43) to the frame portion (11) of the first rail (10) so that a pressing portion of the jig (41, 42, 43) is positioned in the sliding groove (111) in the frame portion (11); and
inserting the guide (21) of the second rail (20) into the sliding groove (111) to apply a pressing force of the pressing portion of the jig (41, 42, 43) to the elastic portion (31, 32) of the elastic member (30) coupled to the guide (21) so that the elastic portion (31, 32) is plastically deformed.

6. The method of claim 5, further comprising:
removing the jig (41, 42, 43) from the first rail (10) after the inserting of the guide (21) so that the elastic portion (31, 32) is in contact with the inner wall surface (11a) of the frame portion (11).

7. The method of claim 5 or 6, wherein the jig (41, 42, 43) comprises:
a main body (44) having an accommodation portion (441) disposed at one side facing the elastic member (30); and
a pressing plate (45) having a pressing portion of the jig (41, 42, 43) and coupled to a bottom of the accommodation portion (441).

8. The method of claim 7, wherein any one of an upper end (11b), a lateral end (11c), and a lower end of the frame portion (11) is inserted into the accommodation portion (441).

9. The method of claim 7 or 8, wherein a pressing force of the pressing plate (45) is applied to the elastic portion (31, 32) in a state in which the pressing plate (45) is inserted into the sliding groove (111) so that the elastic portion (31, 32) is plastically deformed.

10. The method of one of claims 5-9, wherein the elastic portion (31, 32) comprises:
a first elastic portion (31) configured to be convex toward an inner wall surface (11a) of an upper end (11b) of the frame portion (11); and
a second elastic portion (32) configured to be convex toward an inner wall surface (11a) of a lateral end (11c) of the frame portion (11).

11. The method of claim 5 or 6, wherein the jig (41, 42, 43) comprises:
a first jig (41) coupled to an upper end (11b) of the frame portion (11);
a second jig (42) coupled to a lateral end (11c) of the frame portion (11); and
a third jig (43) coupled to a lower end of the frame portion (11), and
wherein a first elastic portion (31) is plastically deformed by a pressing plate (45) of the first jig (41), and a second elastic portion (32) is plastically deformed by a pressing plate (45) of the second jig (42).

## Patentansprüche

1. Schienenvorrichtung, welche aufweist:
eine erste Schiene (10), die Rahmenabschnitte (11) hat, die an zwei entgegengesetzten Seiten davon angeordnet sind, wobei die erste Schiene (10) Schiebenuten (111) hat, wobei jede von den Schiebenuten (111) in jedem von den Rahmenabschnitten (11) definiert ist;
eine zweite Schiene (20), die Führungen (21) hat, die an zwei entgegengesetzten Seiten davon angeordnet sind, wobei jede von den Führungen (21) mit jeder von den Schiebenuten (111) konform ist und in einem Zustand verschiebbar ist, in welchem jede von den Führungen (21) mit jeder von den Schiebenuten (111) gekoppelt ist; und
elastische Elemente (30), wobei jedes mit den Führungen (21) gekoppelt ist und mindestens einen elastischen Abschnitt (31, 32) hat, der mit einer Innenwandfläche (11a) von jedem von den Rahmenabschnitten (11) in Kontakt ist,
wobei jedes von den elastischen Elementen (30) konfiguriert ist, um die zweite Schiene (20) elastisch zu halten,
**dadurch gekennzeichnet, dass**
jedes von den elastischen Elementen (30) aufweist:
erste Kopplungsabschnitte (33), die an einer oberen und einer unteren Seite an jedem von zwei entgegengesetzten Enden von jedem von den elastischen Elementen (30) angeordnet sind, wobei der mindestens eine elastische Abschnitt (31, 32) zwischen den zwei entgegengesetzten Enden angeordnet ist, wobei die ersten Kopplungsabschnitte jede von den Führungen (21) umgeben; und
zweite Kopplungsabschnitte (34), die an zwei entgegengesetzten lateralen Seiten an den jeweiligen zwei entgegengesetzten Enden angeordnet sind und die in Kopplungsnuten von jeder von den Führungen (21) angeordnet sind.

2. Schienenvorrichtung gemäß Anspruch 1, wobei der mindestens eine elastische Abschnitt (31, 32) aufweist:
einen ersten elastischen Abschnitt (31), der mit einer Innenwandfläche (11a) eines oberen Endes (11b) von jedem von den Rahmenabschnitten (11) in Kontakt ist und der konfiguriert ist, um in Richtung der Innenwandfläche (11a) des oberen Endes (11b) von jedem von den Rahmenabschnitten (11) konvex zu sein; und
einen zweiten elastischen Abschnitt (32), der mit einer Innenwandfläche (11a) eines lateralen Endes (11c) von jedem von den Rahmenabschnitten (11) in Kontakt ist und der konfiguriert ist, um in Richtung der Innenwandfläche (11a) des lateralen Endes (11c) von jedem von den Rahmenabschnitten (11) konvex zu sein.

3. Schienenvorrichtung gemäß Anspruch 1 oder 2, wobei die erste Schiene (10) mit einem Fahrzeugkörper verbunden ist und die zweite Schiene (20) mit einem Verbindungsziel verbunden ist.

4. Schienenvorrichtung gemäß Anspruch 3, wobei das Verbindungsziel einen Konsolenkasten hat.

5. Verfahren zum Zusammenbauen der Schienenvorrichtung gemäß Anspruch 1, wobei das Verfahren aufweist:
Koppeln einer Montagevorrichtung (41, 42, 43) mit dem Rahmenabschnitt (11) der ersten Schiene (10), so dass ein Drückabschnitt der Montagevorrichtung (41, 42, 43) in der Schiebenut (111) in dem Rahmenabschnitt (11) angeordnet ist; und
Einsetzen der Führung (21) der zweiten Schiene (20) in die Schiebenut (111), um eine Drückkraft des Drückabschnitts der Montagevorrichtung (41, 42, 43) auf den elastischen Abschnitt (31, 32) des elastischen Elements (30), das mit der Führung (21) gekoppelt ist, auszuüben, so dass der elastische Abschnitt (31, 32) plastisch verformt wird.

6. Verfahren gemäß Anspruch 5, welches ferner aufweist:
Entfernen der Montagevorrichtung (41, 42, 43) von der ersten Schiene (10) nach dem Einsetzen der Führung (21), so dass der elastische Abschnitt (31, 32) mit der Innenwandfläche (11a) des Rahmenabschnitts (11) in Kontakt ist.

7. Verfahren gemäß Anspruch 5 oder 6, wobei die Montagevorrichtung (41, 42, 43) aufweist:
einen Hauptkörper (44), der einen Aufnahmeabschnitt (441) hat, der an einer Seite angeordnet ist, die dem elastischen Element (30) zugewandt ist; und
eine Drückplatte (45), die einen Drückabschnitt der Montagevorrichtung (41, 42, 43) hat und die mit unter Unterseite des Aufnahmeabschnitts (441) gekoppelt ist.

8. Verfahren gemäß Anspruch 7, wobei irgendeines von einem oberen Ende (11b), einem lateralen Ende (11c) und einem unteren Ende des Rahmenabschnitts (11) in den Aufnahmeabschnitt (441) eingesetzt ist.

9. Verfahren gemäß Anspruch 7 oder 8, wobei eine Drückkraft der Drückplatte (45) auf den elastischen Abschnitt (31, 32) in einem Zustand ausgeübt wird, in dem die Drückplatte (45) in die Schiebenut (111) eingesetzt ist, so dass der elastische Abschnitt (31, 32) plastisch verformt wird.

10. Verfahren gemäß einem der Ansprüche 5-9, wobei der elastische Abschnitt (31, 32) aufweist:
einen ersten elastischen Abschnitt (31), der konfiguriert ist, um in Richtung einer Innenwandfläche (11a) eines oberen Endes (11b) des Rahmenabschnitts (11) konvex zu sein; und
einen zweiten elastischen Abschnitt (32), der konfiguriert ist, um in Richtung einer Innenwandfläche (11a) eines lateralen Endes (11c) des Rahmenabschnitts (11) konvex zu sein.

11. Verfahren gemäß Anspruch 5 oder 6, wobei die Montagevorrichtung (41, 42, 43) aufweist:
eine erste Montagevorrichtung (41), die mit einem oberen Ende (11b) des Rahmenabschnitts (11) gekoppelt ist;
eine zweite Montagevorrichtung (42), die mit einem lateralen Ende (11c) des Rahmenabschnitts (11) gekoppelt ist; und
eine dritte Montagevorrichtung (43), die mit einem unteren Ende des Rahmenabschnitts (11) gekoppelt ist, und
wobei ein erster elastischer Abschnitt (31) mittels einer Drückplatte (45) der ersten Montagevorrichtung (41) plastisch verformt wird und ein zweiter elastischer Abschnitt (32) mittels einer Drückplatte (45) der zweiten Montagevorrichtung (42) plastisch verformt wird.

## Revendications

1. Dispositif de rail comprenant :
un premier rail (10) présentant des parties de cadre (11) disposées sur deux côtés opposés de celui-ci, le premier rail (10) présentant des rainures de glissement (111), chacune des rainures de glissement (111) étant définie dans chacune des parties de cadre (11) ;
un deuxième rail (20) présentant des guides (21) disposés sur deux côtés opposés de celui-ci, chacun des guides (21) étant conforme à chacune des rainures de glissement (111) et pouvant coulisser dans un état dans lequel chacun des guides (21) est couplé à chacune des rainures de glissement (111) ; et
des éléments élastiques (30), chacun étant couplé aux guides (21) et présentant au moins une partie élastique (31, 32) en contact avec une surface de paroi intérieure (11a) de chacune des parties de cadre (11),
dans lequel chacun des éléments élastiques (30) est configuré pour supporter élastiquement le deuxième rail (20),
**caractérisé en ce que**
chacun des éléments élastiques (30) comprend :
des premières parties de couplage (33) disposées à des côtés supérieur et inférieur sur chacune de deux extrémités opposées de chacun des éléments élastiques (30), ladite au moins une partie élastique (31, 32) étant intercalée entre les deux extrémités opposées, les premières parties de couplage entourant chacun des guides (21) ; et
des deuxièmes parties de couplage (34) disposées sur deux côtés latéraux opposés aux deux extrémités opposées respectives et disposées dans des rainures de couplage de chacun des guides (21).

2. Dispositif de rail selon la revendication 1, dans lequel ladite au moins une partie élastique (31, 32) comprend :
une première partie élastique (31) en contact avec une surface de paroi intérieure (11a) d'une extrémité supérieure (11b) de chacune des parties de cadre (11) et configurée pour être convexe vers la surface de paroi intérieure (11a) de l'extrémité supérieure (11b) de chacune des parties de cadre (11) ; et
une deuxième partie élastique (32) en contact avec une surface de paroi intérieure (11a) d'une extrémité latérale (11c) de chacune des parties de cadre (11) et configurée pour être convexe vers la surface de paroi intérieure (11a) de l'extrémité latérale (11c) de chacune des parties de cadre (11).

3. Dispositif de rail selon la revendication 1 ou 2, dans lequel le premier rail (10) est relié à une carrosserie de véhicule, et le deuxième rail (20) est relié à une cible de connexion.

4. Dispositif de rail selon la revendication 3, dans lequel la cible de connexion comporte un boîtier de console.

5. Procédé d'assemblage du dispositif de rail selon la revendication 1, le procédé comprenant :
le couplage d'un gabarit (41, 42, 43) à la partie de cadre (11) du premier rail (10) de telle sorte qu'une partie de pression du gabarit (41, 42, 43) soit positionnée dans la rainure de glissement (111) dans la partie de cadre (11) ; et
l'insertion du guide (21) du deuxième rail (20) dans la rainure de glissement (111) pour appliquer une force de pression de la partie de pression du gabarit (41, 42, 43) à la partie élastique (31, 32) de l'élément élastique (30) couplé au guide (21) de manière à déformer plastiquement la partie élastique (31, 32).

6. Procédé selon la revendication 5, comprenant en outre :
le retrait du gabarit (41, 42, 43) du premier rail (10) après l'insertion du guide (21) de manière à ce que la partie élastique (31, 32) soit en contact avec la surface de paroi intérieure (11a) de la partie de cadre (11).

7. Procédé selon la revendication 5 ou 6, dans lequel le gabarit (41, 42, 43) comprend :
un corps principal (44) comportant une partie de logement (441) disposée sur un côté faisant face à l'élément élastique (30) ; et
une plaque de pression (45) comportant une partie de pression du gabarit (41, 42, 43) et couplée à une partie inférieure de la partie de logement (441).

8. Procédé selon la revendication 7, dans lequel l'une quelconque parmi une extrémité supérieure (11b), une extrémité latérale (11c) et une extrémité inférieure de la partie de cadre (11) est insérée dans la partie de logement (441).

9. Procédé selon la revendication 7 ou 8, dans lequel une force de pression de la plaque de pression (45) est appliquée à la partie élastique (31, 32) dans un état dans lequel la plaque de pression (45) est insérée dans la rainure de glissement (111) de manière à déformer plastiquement la partie élastique (31, 32).

10. Procédé selon l'une des revendications 5 à 9, dans lequel la partie élastique (31, 32) comprend :
une première partie élastique (31) configurée pour être convexe vers une surface de paroi intérieure (11a) d'une extrémité supérieure (11b) de la partie de cadre (11) ; et
une deuxième partie élastique (32) configurée pour être convexe vers une surface de paroi intérieure (11a) d'une extrémité latérale (11c) de la partie de cadre (11).

11. Procédé selon la revendication 5 ou 6, dans lequel le gabarit (41, 42, 43) comprend :
un premier gabarit (41) couplé à une extrémité supérieure (11b) de la partie de cadre (11) ;
un deuxième gabarit (42) couplé à une extrémité latérale (11c) de la partie de cadre (11) ; et
un troisième gabarit (43) couplé à une extrémité inférieure de la partie de cadre (11), et
dans lequel une première partie élastique (31) est déformée plastiquement par une plaque de pression (45) du premier gabarit (41), et une deuxième partie élastique (32) est déformée plastiquement par une plaque de pression (45) du deuxième gabarit (42).
